# EUROPÄISCHE PATENTSCHRIFT

(11) **EP 2 404 812 B1**
(45) Veröffentlichungstag und Bekanntmachung des Hinweises auf die Patenterteilung: **09.08.2017**
(21) Anmeldenummer: 11169133.3
(22) Anmeldetag: 08.06.2011
(51) Int. Cl.: B62D 21/09, B62D 25/14, B62D 27/02

(54) **Rohrkörper zur Verwendung im Automobilbereich**
Tubular body for use in automobiles
Corps tubulaire pour l'utilisation dans le domaine automobile

(30) Priorität: 09.07.2010 DE 102010031201
(43) Veröffentlichungstag der Anmeldung: 11.01.2012
(73) Patentinhaber: Thiel & Hoche GmbH & Co. KG, 40699 Erkrath (DE)
(72) Erfinder: Thiel, Axel, 40629 Düsseldorf (DE)
(74) Vertreter: Kalkoff & Partner

(56) Entgegenhaltungen:
- DE-A1- 10 022 360
- DE-A1- 10 340 248
- DE-A1- 19 824 411
- DE-A1- 19 915 381
- FR-A1- 2 865 990
- JP-A- 2001 253 368
- US-A1- 2007 296 247

## Beschreibung

Die Erfindung betrifft einen Rohrkörper, insbesondere zur Verwendung im Automobilbereich, mit einem Basisrohr und einem mit dem Basisrohr verbundenen Unterstützungsrohr, das sich über einen Teilbereich innerhalb des Basisrohres erstreckt und eine polygonale, vier- oder mehreckige oder elliptische Form aufweist, wobei an dem Basisrohr (2) ein Führungselement (7) und an dem Unterstützungsrohr (3) ein mit dem Führungselement (7) in Eingriff bringbares Kopplungselement (8) angeordnet ist.

Rohrkörper der eingangs genannten Art werden in unterschiedlichen Ausgestaltungen zur Herstellung einer Vielzahl von Fahrzeugkomponenten, wie bspw. Fahrzeugsitzen, Cockpit-Trägern oder Querträgern verwendet, wie beispielsweise in den Druckschriften DE 103 40 248 A1, DE 198 24 411 A1, FR 2 865 990 A1, DE 100 22 360 A1 und US 2007/0296247 A1. In der gattungsgemäßen JP 2012 53368 A wird ein Adapter zur Verbindung von Rohren unterschiedlichen Durchmessers offenbart. Die an den jeweiligen Innendurchmesser angepassten Endabschnitte des Adapters werden jeweils in die zu verbindenden Rohrenden geschoben und dort durch Bolzen, die quer zur Längserstreckung der Rohre bzw. des Adapters im Überlappungsbereich die Rohrwand und die Adapterwand durchbrechen, gesichert. Dabei müssen die Rohrkörper festgelegte Festigkeitseigenschaften erfüllen, damit diese auch im Falle eines Fahrzeugunfalls den auftretenden Belastungen standhalten und es nicht zu einem Kollabieren der Fahrzeugkomponenten kommt. Verfahren zur Herstellung derartiger Rohrkörper sind aus der DE 199 15 381 A1 bekannt.

Die Intensität der auf die Rohrkörper wirkenden Belastung variiert dabei aufgrund der komplexen Kraftverläufe über die Länge des Rohrkörpers. So unterliegen in Abhängigkeit von der Position und der Befestigung der Rohrkörper einzelne Teilbereiche unterschiedlich hohen Belastungen. Eine Auslegung der Rohrkörper erfolgt in der Regel unter Berücksichtigung der höchsten auf den Rohrkörper wirkenden Belastung. Dies hat zur Folge, dass der üblicherweise mit einer durchgängig gleichbleibenden Wandstärke ausgeführte Rohrkörper in Teilbereichen, in denen keine hohen Belastungen auftreten, überdimensioniert ist, was neben einem höheren Gewicht für den Rohrkörper auch zu höheren Kosten für dessen Herstellung führt.

Einen weiteren Einfluss auf die Dimensionierung der Rohrkörper haben ggf. erforderliche Nachbearbeitungsschritte der Rohrkörper, wie z.B. Umform- und Biegevorgänge oder durchzuführende Fügeverfahren. Diese können es erforderlich machen, die entsprechenden Bereiche belastbarer zu dimensionieren, so dass sie auch nach den weiteren Bearbeitungsschritten die erforderliche Stabilität aufweisen. Bspw. muss im Falle einer vorgesehenen Schweißung bei der Dimensionierung die Gefahr eines Durchbrands berücksichtigt werden. Ebenso muss bei nachfolgenden Biegevorgängen einem Einreißen der Rohre vorgebeugt werden.

Aus dem Stand der Technik ist es bereits bekannt, Rohrkörper zur partiellen Verstärkung mit einem sich über einen Teilbereich innerhalb des Basisrohres erstreckenden Unterstützungsrohr zu verbinden. Die bekannten Rohrkörper weisen dabei jedoch den Nachteil auf, dass diese keine exakte Ausrichtung des Unterstützungsrohres gegenüber dem Basisrohr ermöglichen, wobei insbesondere keine Möglichkeiten zur Ausrichtung in Umfangsrichtung bestehen. Eine dauerhafte sowie lagersichere Anordnung ist jedoch zwingend erforderlich, um den Rohrkörper die geforderten Festigkeitseigenschaften zu verleihen, insbesondere wenn der Rohrkörper noch eine Umformung erfährt.

Der Erfindung liegt die Aufgabe zugrunde, einen ein Basisrohr und ein Unterstützungsrohr aufweisenden Rohrkörper bereitzustellen, der bei einem geringen Gewicht eine hohe Stabilität, insbesondere besonders belasteter Bereiche aufweist.

Die Erfindung löst die Aufgabe durch einen Rohrkörper mit dem Merkmal des Anspruchs 1. Vorteilhafte Weiterbildungen der Erfindung sind in den abhängigen Ansprüchen angegeben.

Kennzeichnend für den erfindungsgemäßen Rohrkörper ist, dass dieser ein Basisrohr sowie ein mit dem Basisrohr verbundenes Unterstützungsrohr aufweist, welches sich - in Längsrichtung des Basisrohres betrachtet - über einen Teilbereich innerhalb des Basisrohres erstreckt, wobei an dem Basisrohr ein Führungselement und an dem Unterstützungsrohr ein mit dem Führungselement in Eingriff bringbares Kopplungselement angeordnet ist. Erfindungsgemäß dient das Unterstützungsrohr dazu, die sich aus dem Anforderungsprofil an den Rohrkörper ergebenden, besonders belasteten Bereiche partiell zu verstärken. Ein erhöhter, sich durch die Anordnung des Unterstützungsrohres ergebender Materialaufwand ist dabei allein auf die besonderen Belastungen unterliegenden Bereiche beschränkt. Das Basisrohr selbst kann dadurch unter Berücksichtigung geringer Belastungen ausgelegt werden, was insgesamt zu Gewichts- und Kosteneinsparungen führt. Die Erfindung weist den Vorteil auf, dass eine strukturelle Verstärkung besonders beanspruchter Bereiche unabhängig von der Herstellung der für die Basisrohre vorgesehenen Rohre erfolgen kann. Dies ermöglicht es, für die Basisrohre auf Standardrohre zurückzugreifen, was einen erheblichen Kostenvorteil zur Folge hat. Die Verwendung eines oder mehrerer Unterstützungsrohre erlaubt eine selektive Verstärkung einzelner Bereiche, wobei auch die Unterstützungsrohre jeweils entsprechend der zu erreichenden Verstärkung unabhängig voneinander ausgewählt werden können. Es muss kein weit bemessener Bereich der Rohrwand verstärkt werden, um verschiedenen Ausführungen gerecht zu werden.

Gemäß der Erfindung ist vorgesehen, dass an dem Basisrohr ein Führungselement und an dem Unterstützungsrohr ein mit dem Führungselement in Eingriff bringbares Kopplungselement angeordnet ist. Eine entsprechende Ausgestaltung des Basisrohres und des Unterstützungsrohres ermöglicht es, diese relativ zueinander exakt, d.h. auch in Umfangsrichtung des Unterstützungsrohres betrachtet, auszurichten, so dass eine sichere Positionierung des Basisrohres gegenüber dem Unterstützungsrohr erreicht werden kann.

Erfindungsgemäß ist das Führungselement durch einen von einer Oberfläche des Basisrohres vorstehenden Steg und das Kopplungselement durch eine entsprechend ausgebildete Nut gebildet. Eine derartige Ausgestaltung der Verbindung ermöglicht die Festlegung einer einzigen Position, in der das Unterstützungsrohr an dem Basisrohr angeordnet werden kann. Das Zusammenwirken von Führungselement und Kopplungselement verhindert ein Verdrehen des Unterstützungsrohres gegenüber dem Basisrohr, so dass eine sichere Positionierung gewährleistet ist. Der Steg kann dabei von einer Innenseite der Oberfläche des Basisrohres vorstehen . Diese Ausgestaltung der Erfindung ermöglicht überdies die zuverlässige, nach einer vorteilhaften Weiterbildung der Erfindung vorgesehene Anordnung solcher Unterstützungsrohre, die in Umfangsrichtung betrachtet, bereichsweise mit einem Verstärkungselement versehen sind, bspw. Abschnitte höherer Materialdicke aufweisen.

Die Ausgestaltung des Unterstützungsrohres kann grundsätzlich entsprechend der im Anordnungsbereich des Unterstützungsrohres an dem Basisrohr zu erwartenden Belastungen frei gewählt werden. Im Falle einer rein thermischen Beanspruchung, bspw. aufgrund der Belastung durch ein Schweißverfahren, kann auf eine andere Ausgestaltung des Unterstützungsrohres zurückgegriffen werden, als für den Fall, dass eine Steigerung der Festigkeitseigenschaften in umgeformten Bereichen erforderlich ist.

Dabei ist das Unterstützungsrohr innerhalb des Basisrohres angeordnet. Das Unterstützungsrohr wird hierzu mit geeigneten Werkzeugen in das Basisrohr eingeschoben und an vorgegebener Stelle positioniert. Eine entsprechende Ausgestaltung der Erfindung weist den Vorteil auf, dass der derart weitergebildete Rohrkörper über seine gesamte Länge einen gleichbleibenden Außendurchmesser aufweist. Insofern können auch die teilweise bestehenden Anforderungen erfüllt werden, die für im Fahrzeug im Sichtbereich angeordnete Rohrkörper ein ästhetisch ansprechendes Aussehen verlangen, was einen gleichbleibenden Außendurchmesser voraussetzt.

Nach einer weiteren Ausgestaltung der Erfindung ist das Unterstützungsrohr im Bereich eines umgeformten Abschnitts des Basisrohres angeordnet. Demgemäß ist das Unterstützungsrohr in einem Bereich des Basisrohres angeordnet, der bei der Weiterverarbeitung des Rohrkörpers einem Umformprozess bspw. der Herstellung einer Biegung, Prägung, Stauchung oder der Einbringung einer Ausnehmung, wie einer Kerbe, unterliegt. In der Regel wird das Basisrohr aus einem geraden Rohrelement gebildet, welches entsprechend der konstruktiven Vorgaben für einen entsprechenden Bedarfsfall umgeformt wird.

Die Anordnung der Unterstützungsrohre an dem Basisrohr erfolgt in der Regel vor der Durchführung der Umformvorgänge, kann aber auch, sofern technisch möglich, nach der Umformung erfolgen. Im Falle mehrerer unterschiedlicher Umformungen besteht zudem die Möglichkeit, diese selektiv, unter Berücksichtigung der jeweiligen auftretenden Belastung sowie dem Grad, der aus der Umformung resultierenden Schwächung, zu verstärken.

Über die Ausgestaltung der Wandstärke des Unterstützungsrohres kann die erforderliche Verstärkung dabei sehr genau eingestellt werden, so dass das Gewicht nur im erforderlichen Maße erhöht wird. Das Unterstützungsrohr selbst lässt sich dabei besonders einfach und kostengünstig, bspw. durch Abschneiden einzelner Elemente von einem Rohr, herstellen.

Die Ausgestaltung der Verbindung des Unterstützungsrohres mit dem Basisrohr ist grundsätzlich frei wählbar, wobei das Unterstützungsrohr bspw. mit dem Basisrohr verklebt und/oder verschweißt sein kann. Nach einer weiteren Ausgestaltung der Erfindung ist jedoch vorgesehen, dass das Unterstützungsrohr kraft- und/oder formschlüssig mit dem Basisrohr verbunden ist. Diese Verbindung lässt sich besonders einfach und kostengünstig realisieren, wobei insbesondere die Gefügestruktur schwächende thermische Einflüsse vermieden werden. Das Unterstützungsrohr kann bspw. in das Basisrohr eingepasst werden, was neben einer hohen Positionssicherheit zudem den Vorteil aufweist, dass keine zusätzliche und unter Umständen schwächende Umformung des Basisrohres und/oder Unterstützungsrohres zur Positionssicherung des Unterstützungsrohres erforderlich ist.

Die Form des Unterstützungsrohres kann unter Berücksichtigung der zu erzielenden Verstärkung sowie unter Gewichtsgesichtspunkten frei gewählt werden.

Nach einer vorteilhaften Ausgestaltung der Erfindung weist das Unterstützungsrohr jedoch eine an die Form des Basisrohres oder des umgeformten Abschnitts angepasste Form, insbesondere einen an den Querschnitt des umgeformten Bereichs angepassten Querschnitt auf. Gemäß dieser Ausgestaltung der Erfindung entspricht die Kontur des Unterstützungsrohres der Form des Basisrohres bzw. des umgeformten Bereichs. Grundsätzlich kann sich die Kontur dadurch ergeben, dass das Unterstützungsrohr, wie gemäß einer weiteren Ausgestaltung vorgesehen, ebenfalls einem Umformungsprozess des Basisrohres unterliegt, indem das Unterstützungsrohr vor der Verformung angeordnet ist. Es besteht aber auch die Möglichkeit, ein Unterstützungsrohr zu verwenden, das zuvor entsprechend der zu erzielenden Verformung ausgebildet wurde. Hierdurch ergibt sich der Vorteil, dass das Unterstützungsrohr bei der Umformung die Formgebung unterstützt, indem es als Matrize fungiert, wobei gleichzeitig Gefügeänderungen des Unterstützungsrohres aufgrund von Formänderungen vermieden werden.

Die Umformung des Rohrkörpers kann in beliebiger Weise erfolgen, nachdem das Basisrohr über das Unterstützungsrohr eine Kompensation der aus der Umformung resultierenden Schwächung erfährt. Besonders vorteilhafter Weise ist der umgeformte Abschnitt jedoch durch spanende und/oder nicht spanende Bearbeitung des Rohrkörpers gebildet. Diese Bearbeitungsformen eignen sich insbesondere zur Herstellung von Ausnehmungen, wobei eine spanlose Bearbeitung, z.B. das Prägen hierfür besonders bevorzugt ist, da hier ohne Materialverlust gearbeitet werden kann und durch die sich teilweise ergebende Materialverdickung eine zusätzliche Stabilisierung erreicht wird. Insbesondere, wenn besondere Umformgeometrien zur erzielen sind, können aber auch ohne weiteres spanende Bearbeitungsverfahren eingesetzt werden.

Die Anordnung des Unterstützungsrohres an dem Basisrohr kann, wie bereits Eingangs dargelegt, an beliebiger Stelle und damit auch an allen umgeformten Bereichen erfolgen. Hierzu zählen auch solche Bereiche, die bspw. zur Anordnung von Anbauteilen mit einer Bohrung, Halterung, Gewinde oder dergleichen versehen sind. Besonders bevorzugt ist das Unterstützungsrohr jedoch in abgeflachten Bereichen des Basisrohres und/oder im Bereich von Biegungen, Prägungen, Stauchungen, Einkerbungen oder Ausnehmungen angeordnet, da diese Bereiche insbesondere in einem Crash-Fall besonders hohen Belastungen unterliegen.

Die Anordnung des Unterstützungsrohres kann, wie bereits zuvor dargestellt, sowohl vor als auch nach der Umformung des Basisrohres erfolgen. Sofern sich jedoch, wie nach einer vorteilhaften Weiterbildung vorgesehen, die Umformung zur Herstellung des umgeformten Abschnitts auch auf das Unterstützungsrohr erstreckt, ist zwangsläufig eine vorherige Anordnung im Inneren des Basisrohres erforderlich. Diese Ausgestaltung gewährleistet eine sichere Anordnung des Unterstützungsrohres in dem Basisrohr, da durch die Mitverformung eine formschlüssige Verbindung erzielt wird. Insofern kann auf eine alternative Festlegung des Unterstützungsrohres am Basisrohr verzichtet werden. Ferner wird auch eine gute Kraftübertragung gewährleistet.

Das Unterstützungsrohr kann grundsätzlich an jeder Stelle des Rohres eingesetzt werden, an der Umformungen, z.B. Ausnehmungen, vorgesehen sind. Besonders bevorzugt werden die Unterstützungsrohre jedoch dort eingesetzt, wo Berechnungen zur Belastung zeigen, dass das Material der Rohrwand des Basisrohres vor und/oder nach der Bearbeitung keine ausreichende Festigkeit aufweist.

Unterstützungsrohre mit in Umfangsrichtung betrachtet variierender Materialdicke weisen Bereiche höherer und geringerer Materialdicke auf. Die Ausgestaltung des Unterstützungsrohres kann dabei entsprechend der zu erwartenden Belastungen sowie Belastungsverläufe in Abhängigkeit von der Ausrichtung des Unterstützungsrohres gegenüber dem Basisrohr erfolgen, so dass durch eine exakte Positionierung eine zusätzliche Materialreduzierung des gesamten Rohrkörpers möglich ist.

Das Unterstützungsrohr ist in der Regel, wie das Basisrohr, aus Metall hergestellt. Nach einer vorteilhaften Weiterbildung der Erfindung ist das Unterstützungsrohr jedoch aus einem Material gebildet, das von dem des Basisrohres abweicht. Abweichende Materialien können dabei andere Metalle, aber auch andere Werkstoffe wie keramische Werkstoffe, Kunststoffe, faserverstärkte Kunststoffe oder andere Verbundwerkstoffe sein. Die Verwendung abweichender Materialien erlaubt den Einsatz eines breiten Spektrums unterschiedlich ausgestalteter Unterstützungsrohre, wodurch eine weitergehende Optimierung hinsichtlich Kosten und Gewicht möglich ist. Auch lassen sich für unterschiedliche Bereiche des Basisrohres in Form und Material verschiedenartige Unterstützungsrohre verwenden, die den jeweiligen Belastungen angepasst ausgebildet sind.

Diese Ausgestaltung ermöglicht es bspw. ein Standardrohr im Lager vorzuhalten, in welches das Unterstützungsrohr aus unterschiedlichem Material eingesetzt wird, je nachdem, wie das Basisrohr auszuführen ist. Das Material kann nach Gewicht, Belastbarkeit oder Festigkeit gewählt werden. Insbesondere kann das Material des Basisrohres fester oder dichter als das Material des Unterstützungsrohres sein. Alternativ kann das Material des Unterstützungsohres fester oder dichter als das Material des Basisrohres sein.

Bspw. kann ein hochfester Werkstoff für das Basisrohr gewählt werden, so dass dann leichte Unterstützungsrohre im Bereich der Umformung eingesetzt werden, die nur noch einen geringen Beitrag zur Festigkeit im Bereich der Umformung in jeder Art leisten. Alternativ kann z.B. ein verhältnismäßig weiches Basisrohr mit geringer Festigkeit eingesetzt werden, das dann im Bereich der Umformungen oder höher beanspruchter Zonen des Basisrohres durch ein besonders festes, versteifend wirkendes Unterstützungsrohr verstärkt wird. In einer einfachen Ausführungsform kann das Unterstützungsrohr bspw. als Hülse ausgebildet, einen geschlossenen Umfang aufweisen. Der Radius des Unterstützungsrohres ist häufig so bemessen, dass das Unterstützungsrohr im Basisrohr verschoben werden kann. Besonders bevorzugt weist das Unterstützungsrohr jedoch einen Schlitz auf, der sich vorteilhaft in dessen Längsrichtung erstreckt. Im einfachsten Fall ist das Unterstützungsrohr mit einer Nut versehen, die geringfügig größer ist als die Abmessung der das Basisrohr, bspw. aus einem Bandstahl, bildende Schweißnaht. Bevorzugt ist es, wenn der Schlitz die Wand einer Hülse vollständig durchsetzt oder wenn er mindestens die Länge des Radius eines Unterstützungsrohres aufweist.

Das Basisrohr kann eine Schweißnaht aufweisen. Die Schweißnaht reduziert den Innendurchmesser des Basisrohres geringfügig, oft nur um Bruchteile von Millimetern. Diese Reduzierung genügt jedoch, um die ungehinderte Bewegung von Formwerkzeugen, z.B. eines Dorns, zu behindern, welche in das Rohr eingebracht werden, um z.B. eine Umformung zu erzeugen. Außerdem erweist sich die Schweißnaht meist als Bereich verringerter Festigkeit. Alternativ zur Anordnung des Unterstützungsrohres als Hülse im Inneren kann, wie bereits zuvor ausgeführt, das Verstärkungselement auch durch eine oder mehrere Außenhöhlen gebildet werden, welche bevorzugt bspw. im Bereich von Serienbiegungen eingesetzt werden, um Innenwerkzeugen die Durchgängigkeit zu gewährleisten.

Nach einer besonders vorteilhaften Ausführung der Erfindung fluchtet der Schlitz des innen angebrachten Unterstützungsrohres mit der Schweißnaht. Mit dieser Ausführung sind mehrere Vorteile verbunden. Zum einen kann die Schweißnaht als Führung für das Unterstützungsrohr dienen. Zum anderen verstärkt das Material des Unterstützungsrohres das Basisrohr auch im Bereich der Schweißnaht, so dass eine Umformung ohne Rücksicht auf die Lage der Schweißnaht angebracht werden kann. Schließlich wirkt das Unterstützungsrohr wie ein Distanzstück, weil sich z.B. ein Dorn nun beim Prägen gegen eine Hülse abstützt und auf deren Innendurchmesser abgestimmt ist.

Kennzeichnend für das erfindungsgemäße Verfahren ist, dass zur Herstellung eines Rohrkörpers folgende Schritte durchgeführt werden:
- Anordnung eines Unterstützungsrohres an einem Basisrohr im Bereich eines umzuformenden Abschnitts des Basisrohres und
- Umformung des vorhergesehenen Abschnitts.

Das erfindungsgemäße Verfahren ermöglicht das Herstellen des erfindungsgemäßen Rohrstückes mit wenigen Schritten. Unter Verwendung von nur zwei Bauteilen kann dieses individuell und flexibel gefertigt werden, da die Vorgaben zum Ausrichten des Unterstützungsrohres und zur Gestaltung der Umformung, bspw. Ausnehmung, mit wenigen Maßnahmen umgestellt werden können.

Ausführungsbeispiele der Erfindung werden nachfolgend mit Bezug auf die Zeichnungen näher erläutert. In den Zeichnungen zeigen:
- Fig. 1: eine perspektivische Ansicht einer nicht unter das Schutzrecht fallenden Ausführungsform eines gebogenen Rohrkörpers aus einem Basisrohr mit daran angeordneten Unterstützungsrohren;
- Fig. 2: eine perspektivische Ansicht einer Schnittdarstellung einer ersten Ausführungsform des erfindungsgemäßen Rohrkörpers;
- Fig. 3: eine perspektivische Ansicht einer zweiten Ausführungsform eines Rohrkörpers;
- Fig. 4: eine perspektivische Ansicht einer dritten Ausführungsform eines Rohrkörpers und
- Fig. 5: eine perspektivische Ansicht des Rohrkörpers von Fig. 4 teilweise im Schnitt mit daran angeordneten Funktionselementen.

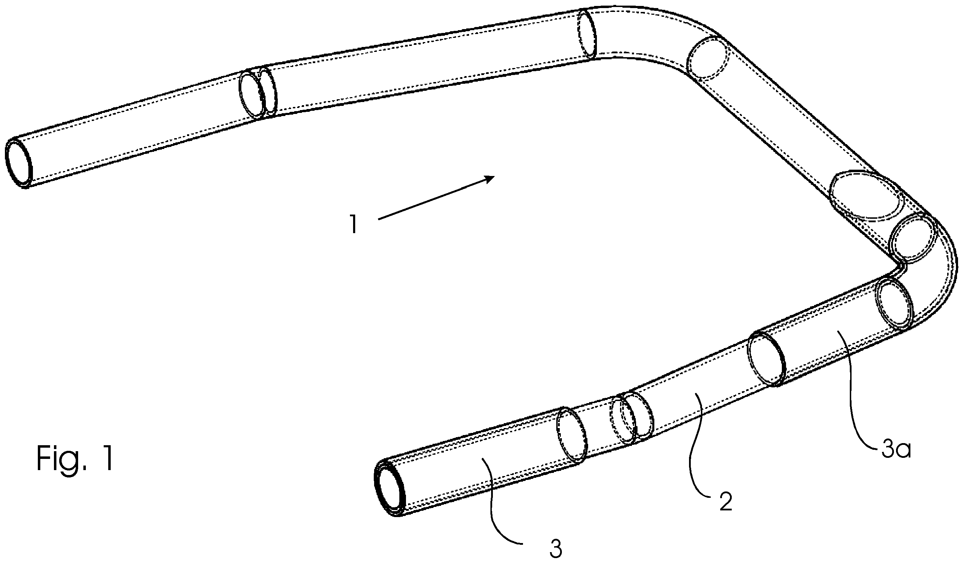

In Figur 1 ist in einer perspektivischen Darstellung ein bereits gebogener Rohrkörper 1 dargestellt. Der Rohrkörper 1 ist aus einem Basisrohr 2 gebildet, an dem in zwei Bereichen, nämlich einenends des Basisrohres 2 sowie im Bereich einer Biegung Unterstützungsrohre 3, 3a angeordnet sind. Die Unterstützungsrohre 3, 3a sind außenseitig an dem Basisrohr 2 angeordnet und kraftschlüssig mit diesem verbunden. Die Anordnung des Unterstützungsrohres 3a erfolgte vor der Biegung des Rohrkörpers 1 wohingegen das Unterstützungsrohr 3 vor oder nach der Bearbeitung des Basisrohres 2 aufgeschoben werden kann.

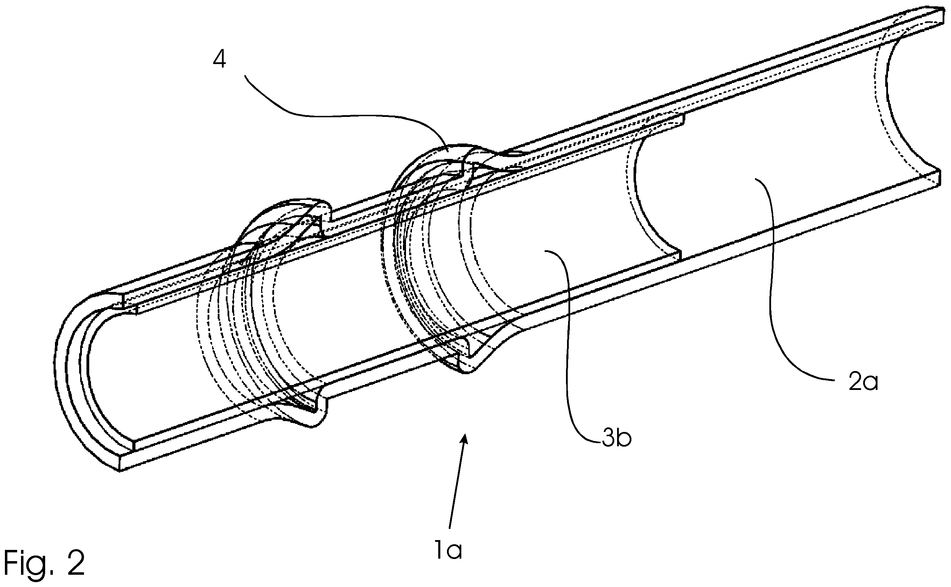

In Figur 2 ist in einer perspektivischen Darstellung eine Schnittansicht einer ersten Ausführungsform eines Rohrkörpers 1a dargestellt. Im Gegensatz zu dem in Fig. 1 dargestellten Rohrkörper 1 ist das Basisrohr 2a durch ein in dessen Inneren angeordnetes Unterstützungsrohr 3b im Bereich von Stauchungen 4 des Basisrohres 2a angeordnet. Die Anordnung des Unterstützungsrohres 3b im Inneren des Basisrohres 2a erlaubt eine außenseitige Ausbildung von Funktionselementen, wie die Stauchungen 4 und verstärkt zugleich den umgeformten Bereich. Grundsätzlich besteht ferner die Möglichkeit, das im Basisrohr 2a angeordnete Unterstützungsrohr 3b durch weitere Formgebungsverfahren zu bearbeiten, durch die bspw. Material des Unterstützungsrohres 3b in die durch die Stauchung 4 gebildeten Hohlräume fließt.

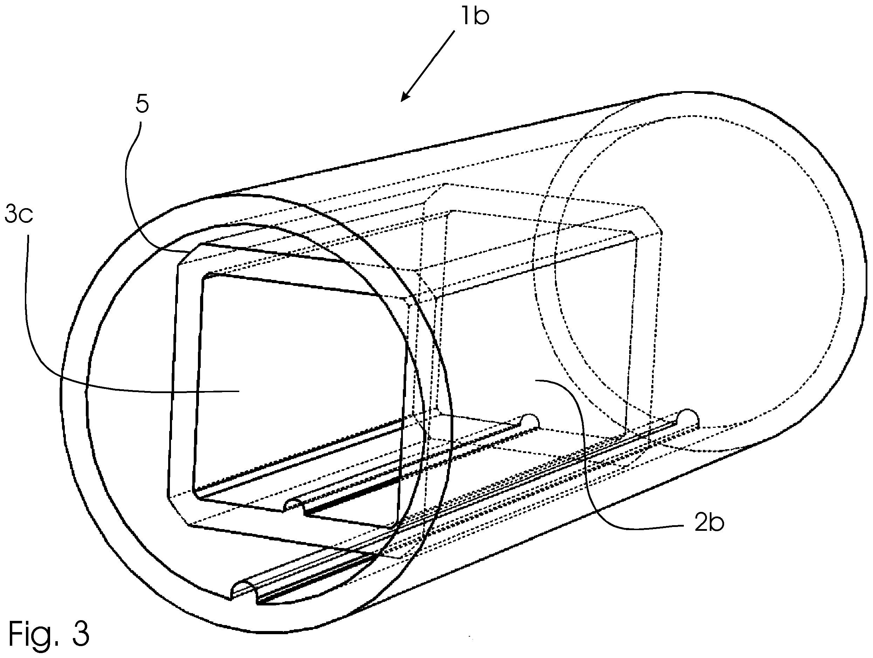

In einer weiteren in Figur 3 dargestellten Ausgestaltung ist der Rohrkörper 1b durch ein zylindrisches Basisrohr 2b gebildet, in dem ein von der Form des Basisrohres 2b abweichendes Unterstützungsrohr 3c angeordnet ist. In dem in Figur 3 dargestellten Ausführungsbeispiel ist das Unterstützungsrohr 3c im Querschnitt quadratisch und liegt mit abgeflachten Eckbereichen 5 an einer Innenseite des Basisrohres 2b an. Die Wahl eines mehreckigen, wie im dargestellten Ausführungsbeispiel viereckigen Unterstützungsrohres 3c erhöht in ergänzendem Maße die Steifigkeit des aus dem Basisrohr 2b und dem Unterstützungsrohr 3c gebildeten Rohrkörpers 1b, wobei insbesondere in Längsrichtung der Kanten des Unterstützungsohres 3c wirkenden Kräften ein hoher Widerstand entgegengesetzt wird.

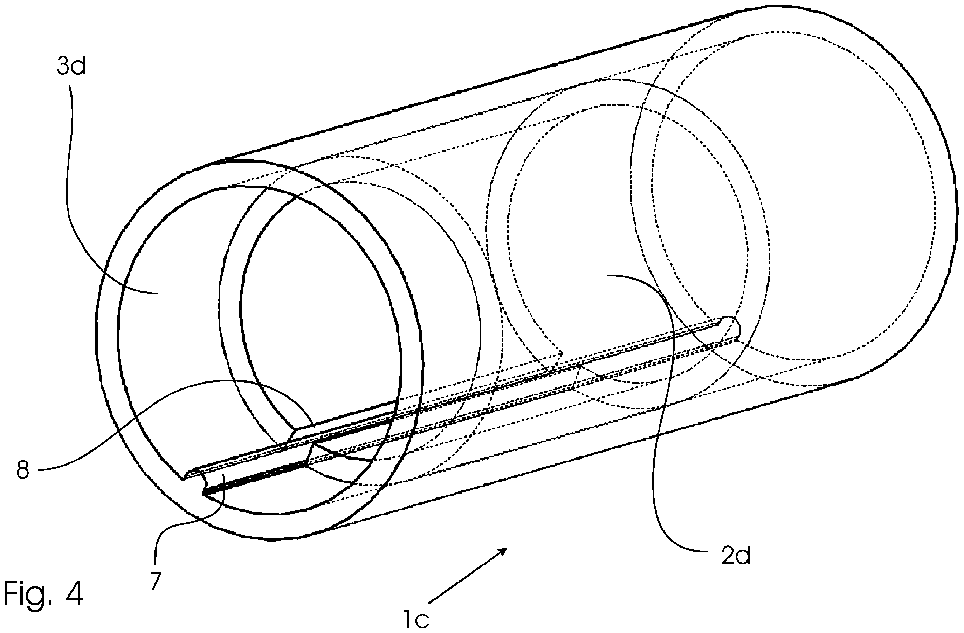

In einer weiteren, in Figur 4 dargestellten Ausführungsform der Erfindung ist der Rohrkörper 1c, wie bei dem in Figur 3 dargestellten Ausführungsbeispiel aus einem zylindrischen Basisrohr 2b und einem entsprechend dem Innendurchmesser ausgebildeten Unterstützungsrohr 3d gebildet. Das Unterstützungsrohr 3d weist dabei eine Nut 8 auf, die entsprechend einem Steg 7 ausgebildet ist, der in Längsrichtung des Basisrohres 2b an dessen Innenseite verläuft. Der Steg 7 und die Nut 8 wirken als Führungselemente zusammen und verhindern ein Verdrehen des Unterstützungsrohres 3b gegenüber dem Basisrohr 2b. Die Verwendung von Führungselementen ermöglicht somit eine exakte Positionierung des Unterstützungsrohres 3d gegenüber dem Basisrohr 2b, was insbesondere dann von Interesse ist, wenn das Unterstützungsrohr 3d zur ergänzenden Gewichtsreduzierung in dessen Umfangsrichtung betrachtet, unterschiedliche Materialdicken aufweist, so dass dessen Unterstützungswirkung von der Positionierung im Basisrohr 2b abhängt.

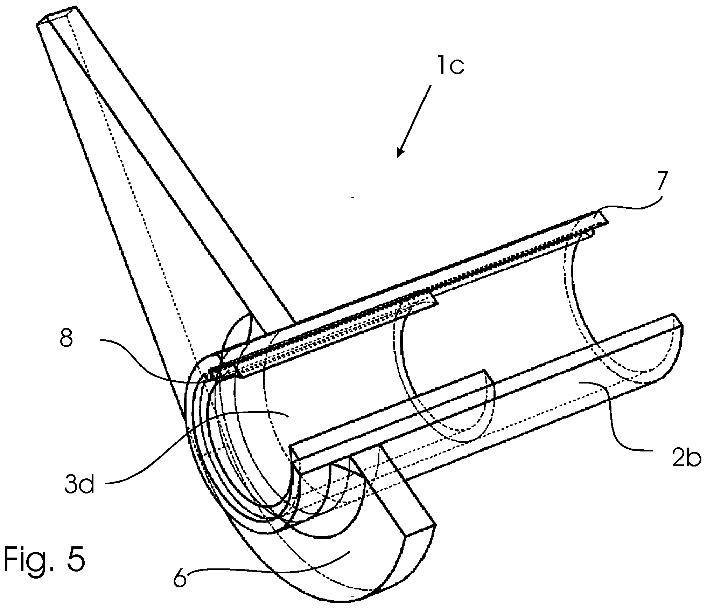

Der Rohrkörper 1c kann in beliebiger Weise eingesetzt werden. Eine beispielhafte Ausführungsform ist in Figur 5 dargestellt, bei der an den Rohrkörper 1c im Bereich des Unterstützungsrohres 3d ein Funktionselement 6 angeschweißt ist. In diesem Fall verhindert das Unterstützungsrohr 3d zum einen ein Durchbrennen und verleiht dem Rohrkörper 1c im Verbindungsbereich eine höhere Stabilität.

## Patentansprüche

1. Rohrkörper, insbesondere zur Verwendung im Automobilbereich, mit einem zylindrischen Basisrohr (2) und einem mit dem Basisrohr (2) verbundenen Unterstützungsrohr (3), das sich über einen Teilbereich innerhalb des Basisrohres (2) erstreckt und eine polygonale, vier- oder mehreckige oder elliptische Form aufweist, wobei an dem Basisrohr (2) ein Führungselement (7) und an dem Unterstützungsrohr (3) ein mit dem Führungselement (7) in Eingriff bringbares Kopplungselement (8) angeordnet ist, **dadurch gekennzeichnet, dass** das Unterstützungsrohr sich über seine gesamte Länge über den Teilbereich innerhalb des Basisrohres (2) erstreckt und, dass das Führungselement durch einen von einer Oberfläche des Basisrohres (2) vorstehenden Steg (7) und das Kopplungselement durch eine entsprechend ausgebildete Nut (8) gebildet ist..

2. Rohrkörper nach Anspruch 1, **dadurch gekennzeichnet, dass** das Unterstützungsrohr (3) im Bereich eines umgeformten Abschnitts des Basisrohres (2) angeordnet ist.

3. Rohrkörper nach Anspruch 1 oder 2, **dadurch gekennzeichnet, dass** das Unterstützungsrohr (3) kraft- und/oder formschlüssig mit dem Basisrohr (2) verbunden ist.

4. Rohrkörper nach einem der vorhergehenden Ansprüche, **dadurch gekennzeichnet, dass** das Unterstützungsrohr (3) eine an die Form des Basisrohres oder des umgeformten Abschnitts angepasste Form, insbesondere an den Querschnitt des umgeformten Bereichs angepassten Querschnitt aufweist.

5. Rohrkörper nach einem der vorhergehenden Ansprüche, **dadurch gekennzeichnet, dass** das Unterstützungsrohr (2) bereichsweise mit einem Verstärkungselement versehen ist, vorzugsweise Abschnitte höherer Materialdicke aufweist.

6. Rohrkörper nach einem der vorhergehenden Ansprüche, **dadurch gekennzeichnet, dass** sich die Umformung zur Herstellung des umgeformten Abschnitts auf das Unterstützungsrohr (3) erstreckt.

7. Rohrkörper nach einem der vorhergehenden Ansprüche, **dadurch gekennzeichnet, dass** das Unterstützungsrohr (3) aus einem vom Material des Basisrohres (2) abweichenden Material gebildet ist.

## Claims

1. A tubular body, in particular for use in the automotive sector, with a cylindrical basic tube (2) and a support tube (3) that is connected to the basic tube (2) and extends over a section within the basic tube (2) and has a polygonal, quadrangular or elliptical shape, wherein a guide element (7) is arranged on the basic tube (2), and a coupling element (8) that can engage in the guide element (7) is arranged on the support tube (3), **characterized in that** the entire length of the support tube extends over the section within the basic tube (2), and that the guide element is formed by a bar (7) projecting from a surface of the basic tube (2), and the coupling element is formed by a correspondingly configured groove (8).

2. The tubular body according to claim 1, **characterized in that** the support tube (3) is arranged in the region of a reshaped section of the basic tube (2).

3. The tubular body according to claim 1 or 2, **characterized in that** the support tube (3) is connected in a force fit and/or form fit to the basic tube (2).

4. The tubular body according to one of the preceding claims, **characterized in that** the support tube (3) has a shape adapted to the shape of the basic tube or the reshaped section, in particular has a cross-section adapted to the cross-section of the reshaped region.

5. The tubular body according to one of the preceding claims, **characterized in that** the support tube (2) is provided sectionally with a reinforcing element, preferably has sections with a greater material thickness.

6. The tubular body according to one of the preceding claims, **characterized in that** the reshaping to produce the reshaped section extends to the support tube (3).

7. The tubular body according to one of the preceding claims, **characterized in that** the support tube (3) is formed from a material that deviates from the material of the basic tube (2).

## Revendications

1. Corps tubulaire, en particulier pour l'utilisation dans le domaine automobile, comprenant un tuyau de base cylindrique (2) et un tuyau de support (3) relié au tuyau de base (2), lequel s'étend sur une région partielle à l'intérieur du tuyau de base (2) et présente une forme polygonale, carrée ou elliptique, un élément de guidage (7) étant disposé sur le tuyau de base (2) et un élément d'accouplement (8) apte à venir en prise avec l'élément de guidage (7) étant disposé sur le tuyau de support (3), **caractérisé en ce que** le tuyau de support s'étend de toute sa longueur sur la région partielle à l'intérieur du tuyau de base (2), et **en ce que** l'élément de guidage est formé par une âme (7) faisant saillie sur une surface supérieure du tuyau de base (2) et l'élément d'accouplement est formé par une rainure (8) correspondante.

2. Corps tubulaire selon la revendication 1, **caractérisé en ce que** le tuyau de support (3) est disposé dans la région d'une section déformée du tuyau de base (2).

3. Corps tubulaire selon la revendication 1 ou 2, **caractérisé en ce que** le tuyau de support (3) est relié au tuyau de base (2) par blocage et/ou par complémentarité de forme.

4. Corps tubulaire selon l'une des revendications précédentes, **caractérisé en ce que** le tuyau de support (3) présente une forme adaptée à la forme du tuyau de base ou de la section déformée, et présente en particulier une section transversale adaptée à la section transversale de la région déformée.

5. Corps tubulaire selon l'une des revendications précédentes, **caractérisé en ce que** le tuyau de support (2) est pourvu par endroits d'un élément de renforcement, et présente avantageusement des sections dont l'épaisseur de matériau est plus élevée.

6. Corps tubulaire selon l'une des revendications précédentes, **caractérisé en ce que** la déformation visant à fabriquer la section déformée s'étend sur le tuyau de support (3).

7. Corps tubulaire selon l'une des revendications précédentes, **caractérisé en ce que** le tuyau de support (3) est constitué d'un matériau différent du matériau du tuyau de base (2).
